# EUROPÄISCHE PATENTANMELDUNG

(11) **EP 2 551 160 A2**
(43) Veröffentlichungstag der Anmeldung: **30.01.2013**
(21) Anmeldenummer: 12169836.9
(22) Anmeldetag: 29.05.2012
(51) Int. Cl.: B60T 8/36, F16K 31/06

(54) **Magnetventil zum Steuern eines Fluids**

(30) Priorität: 26.07.2011 DE 102011079866
(71) Anmelder: ROBERT BOSCH GMBH, 70442 Stuttgart (DE)
(72) Erfinder: Steingass, Stephan, 55237 Bornheim (DE); Vier, Elmar, 71691 Freiberg A. N. (DE); Loew, Kornelius, 74193 Schwaigern (DE)

(57) **Zusammenfassung**

Die Erfindung betrifft ein Magnetventil zum Steuern eines Fluids, umfassend einen Anker (2), ein Ventilglied (3), welches einen kalottenförmigen Endbereich (30) aufweist und welches am Anker (2) anliegt und gemeinsam mit dem Anker (2) bewegbar ist, und einen Ventilkörper (4), mit einem Ventilsitz (6), und einer Durchgangsöffnung (5), wobei das Ventilglied (3) die Durchgangsöffnung (5) am Ventilsitz (6) freigibt und verschließt, wobei ein Führungselement (40) am kalottenförmigen Endbereich (30) angeordnet ist und in die Durchgangsöffnung (5) vorsteht.

## Beschreibung

Die vorliegende Erfindung betrifft ein Magnetventil zum Steuern eines Fluids.

Magnetventile zum Steuern eines Fluids sind aus dem Stand der Technik in unterschiedlichen Ausgestaltungen, insbesondere z. B. als Auslassventile für ABS-/TCS-/ESP-Vorrichtungen in Kraftfahrzeugen, bekannt. Ventilglieder dieser Magnetventile werden im Regelbetrieb üblicherweise im oberen Bereich des Ventileinsatzes und durch den Kontakt in einem konischen Ventilsitz eines Ventilkörpers geführt. In bestimmten Belastungs- bzw. Betriebszuständen treten hierbei jedoch Verformungen und/oder Beschädigungen des Ventilglieds insbesondere bei mittleren bis großen Hubpositionen auf, bei denen in einer Teilhubposition ein Kontakt des Ventilglieds mit dem Ventilkörper möglich ist. Dies kann zu einer unzulässigen Beeinträchtigung bzw. Veränderung der Ventilfunktion führen.

### Offenbarung der Erfindung

Das erfindungsgemäße Magnetventil zum Steuern eines Fluids mit den Merkmalen des Anspruchs 1 weist demgegenüber den Vorteil auf, dass eine zusätzliche Führung des Ventilglieds am Ventilkörper vorgesehen ist. Dadurch kann ein Abheben des Ventilglieds vom Ventilsitz bereits im kleinen Hubbereich erzwungen werden. Ferner werden im mittleren und großen Hubbereich die radialen Führungskräfte besser aufgenommen, so dass ein Kontakt zwischen Ventilglied und Ventilkörper, insbesondere in Teilhubpositionen, und daraus folgende Beschädigungen verhindert werden. Dies wird erfindungsgemäß dadurch erreicht, dass das Magnetventil zum Steuern eines Fluids einen Anker und ein Ventilglied umfasst. Das Ventilglied weist einen kalottenförmigen Endbereich auf und liegt am Anker an und ist gemeinsam mit dem Anker bewegbar. Das Magnetventil weist ferner einen Ventilkörper mit einem Ventilsitz und einer Durchgangsöffnung auf, die vom Ventilglied am Ventilsitz freigegeben und verschlossen wird. Ferner ist ein Führungselement am kalottenförmigen Endbereich angeordnet, welches in die Durchgangsöffnung vorsteht. Hierbei ist das Führungselement mit dem kalottenförmigen Endbereich des Ventilglieds einstückig ausgebildet. Dadurch kann auf einfache Weise eine verbesserte Führung des Ventilglieds erreicht werden, da das Ventilglied durch das Führungselement in der Durchgangsöffnung geführt wird. Eine Führung des Ventilglieds erfolgt somit in Durchströmungsrichtung des Fluids durch das Ventil vor dem Ventilsitz. Zudem entfällt somit ein großer Teil der Toleranzkette des Magnetventils, wodurch die Fertigung wesentlich vereinfacht wird. Folglich ist es aufgrund der dadurch gegebenen großen Führungslänge möglich, eine enge und präzisere Führung in jeder Stellung des Ventilglieds zu erreichen. Zudem werden die Dicht- und Führungsfunktion auf unterschiedliche, jeweils belastungsunkritische Bauelemente verteilt.

Die Unteransprüche zeigen bevorzugte Weiterbildungen der Erfindung.

In weiterer vorteilhafter Ausgestaltung der Erfindung ist das Führungselement als Führungszapfen ausgebildet, welcher in Axialrichtung zentrisch am kalottenförmigen Endbereich angeordnet ist. Hierdurch kann eine effektive Abstützung bzw. Führung in möglichst kurzem Abstand von einer Dichtlinie zwischen dem kalottenförmigen Endbereich und dem Ventilkörper realisiert werden. Dadurch, dass die radiale Führung des Ventilglieds, die im hydraulischen Betrieb erhebliche Belastungen aufnehmen muss, außerhalb des kalottenförmigen Endbereichs erfolgt, kann die auftretende Belastung von einem schadensanfälligen auf einen schadensunkritischen Bauteilbereich umgeleitet werden.

Vorzugsweise ist der Führungszapfen am Ventilglied im Wesentlichen zylindrisch oder kegelförmig ausgebildet. Neben der einfachen und kostengünstigen Herstellung wird dadurch eine optimierte Konturierung für das Zusammenspiel mit der Durchgangsöffnung am Ventilkörper erreicht.

Gemäß einer bevorzugten Ausgestaltung der Erfindung das Führungselement eine Stirnseite mit einer kalottenförmigen Kuppe oder halbkugelförmigen Kuppe auf. Hierdurch werden günstige Strömungsverhältnisse am kalottenförmigen Endbereich des Ventilglieds erreicht, die einen widerstandsreduzierten Eintritt des Fluids in die Durchgangsöffnung ermöglichen.

In weiterer vorteilhafter Ausgestaltung der Erfindung weist das Führungselement eine oder mehrere, vorzugsweise in Axialrichtung, verlaufende Nuten auf. Weiterhin bevorzugt weist das Führungselement eine oder mehrere Abflachungen auf. Dadurch kann eine Erhöhung bzw. Homogenisierung der für bestimmte Betriebszustände erforderlichen Durchsatzmenge des Fluids erreicht werden.

Vorzugsweise ist im geschlossenen Zustand des Magnetventils zwischen der Mantelfläche des Führungselements und einer Innenwand der Durchgangsöffnung ein ringförmiger Spalt gebildet. Hierdurch wird ein mechanischer Kontakt zwischen dem Führungselement und der Durchgangsöffnung im geschlossenen Zustand verhindert. Ferner wird dadurch ein selbstständiges Auffinden der Dichtposition im Ventilsitz beim Schließen des Magnetventils erreicht.

In weiterer vorteilhafter Ausgestaltung ist die Durchgangsöffnung in Durchströmungsrichtung sich verjüngend, insbesondere konisch ausgebildet. Dadurch kann ein kostengünstig und wirtschaftlich herzustellender Ventilkörper bereitgestellt werden, der kompatibel zur bisherigen Einbausituation und Montagesituation ist. Zudem kann dieses Bauteil auch zur Um- bzw. Nachrüstung vorhandener Baureihen verwendet werden.

Gemäß einer bevorzugten Ausgestaltung der Erfindung ist eine axiale Länge des Führungselements größer als ein maximaler Hub des Magnetventils.
Aufgrund der geometrischen Dimensionierung des Führungselements kann somit erreicht werden, dass der kalottenförmige Endbereich des Ventilglieds bereits bei einem kleinen Hub mit einer minimierten radialen Auslenkung vom Ventilsitz abhebt. Ferner können hierdurch Belastungen bzw. Beschädigungen beim Schließvorgang, bei dem das Ventilglied radial ausgelenkt in Kontakt mit dem Ventilsitz kommt, deutlich reduziert werden. Ferner können auch die bei mittleren und großen Hüben auftretenden radialen Führungskräfte vom Führungselement betriebssicher aufgenommen werden und ein Kontakt im Dichtbereich der Kalotte wirksam verhindert werden. Auch bei Maximalhub ist ein Austritt des Führungselements aus der Durchgangsöffnung somit nicht möglich, so dass eine betriebssichere Führung durch das Führungselement über den gesamten Hubbereich gewährleistet ist.

### Zeichnung

Nachfolgend wird ein Ausführungsbeispiel der Erfindung unter Bezugnahme auf die begleitende Zeichnung im Detail beschrieben. In der Zeichnung ist:
- Figur 1: eine schematische Schnittdarstellung eines Magnetventils zum Steuern eines Fluids gemäß einem bevorzugten Ausführungsbeispiel der Erfindung,
- Figur 2: eine schematische Teilansicht des Magnetventils von Figur 1 im geschlossenen Zustand,
- Figur 3: eine schematische Teilansicht des Magnetventils von Figur 1 in teilweise geöffnetem Zustand mit kleinem Öffnungshub, und
- Figur 4: eine schematische Teilansicht des Magnetventil von Figur 1 in teilweise geöffnetem Zustand mit mittlerem Öffnungshub.

### Ausführungsform der Erfindung

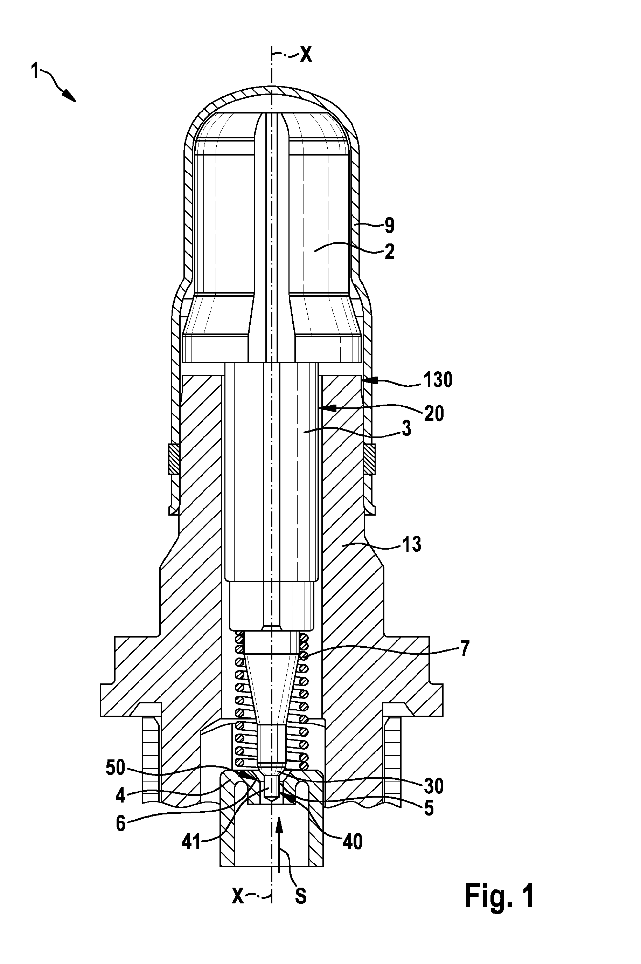

Nachfolgend wird unter Bezugnahme auf die Figuren 1 bis 4 ein Magnetventil zum Steuern eines Fluids gemäß einem bevorzugten Ausführungsbeispiel der Erfindung im Detail beschrieben.

Figur 1 zeigt eine schematische Schnittdarstellung eines Magnetventils 1 zum Steuern eines Fluids gemäß einem bevorzugten Ausführungsbeispiel der Erfindung.

Das Magnetventil 1 umfasst einen Anker 2, ein Ventilglied 3 sowie einen Ventilkörper 4, die in einem Polgehäuse 9 bzw. einem damit verbundenen Gehäuse 13 koaxial zu einer Achsenrichtung X-X angeordnet sind. Der Anker 2 ist hierbei im Polgehäuse 9 als auch im Gehäuse 13 untergebracht. Das Ventilglied 3 liegt am Anker 2 an und ist gemeinsam mit diesem bewegbar. Am Ventilglied 3 ist auf Höhe eines ersten Endbereichs 130 des Gehäuses 13 ein erster Führungsbereich 20 zur Führung des Ventilglieds 3 vorgesehen. Zwischen dem Ventilglied 3 dem Ventilkörper4 ist in Axialrichtung X-X ein Rückstellelement 7 vorgesehen, welches das Magnetventil 1 stromlosen Zustand offen hält. Der Ventilkörper 4 weist einen Ventilsitz 6 und eine Durchgangsöffnung 5 auf, in die ein Fluid in einer Strömungsrichtung S zugeführt wird und die vom Ventilglied 3 freigegeben und verschlossen wird.

Das Ventilglied 3 ist aus einem zylinderförmigen Stößelbereich und einem konisch zulaufenden Nadelbereich mit einem kalottenförmigen Endbereich 30 einstückig ausgebildet, wobei am Endbereich 30 ein Führungselement 40 angeordnet ist, das in die Durchgangsöffnung 5 hineinragt. Dadurch wird ein zweiter Führungsbereich 50 zur Führung des Ventilglieds 3 gebildet. Das Führungselement 40 ist als Führungszapfen 41 ausgebildet, der einstückig mit dem Ventilglied 3 ausgebildet ist und in Axialrichtung X-X zentrisch am kalottenförmigen Endbereich angeordnet ist. Der Führungszapfen 41 weist eine im Wesentlichen zylindrische Form sowie eine axiale Länge L auf, die größer als ein maximaler Hub des Magnetventils 1 ist. Alternativ kann der Führungszapfen 41 auch kegelförmig ausgebildet sein. Obwohl hier nicht dargestellt, kann dementsprechend auch die Durchgangsöffnung 5 sich in der Durchströmungsrichtung verjüngend, insbesondere konisch, ausgebildet sein. Zudem kann das Führungselement 40 auf seiner Mantelfläche ferner eine oder mehrere, vorzugsweise in Axialrichtung X-X, verlaufende Nuten oder Abflachungen aufweisen, um den möglichen Fluid-Durchsatz zu erhöhen.

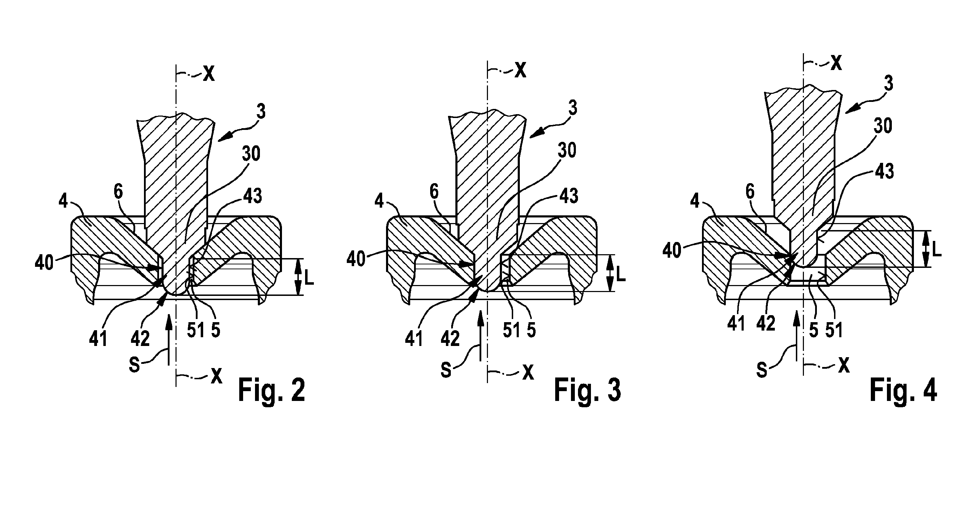

Wie in Figur 2 dargestellt, weist der Führungsabschnitt 41 eine Stirnseite 42 auf, die mit einer kalottenförmigen Kuppe ausgebildet ist. Alternativ dazu kann die Stirnseite 42 auch in Form einer halbkugelförmigen Kuppe ausgebildet sein.

Wie aus Figur 2 weiter ersichtlich, liegt im geschlossenen Zustand des Magnetventils 1 der kalottenförmige Endbereich 30 auf dem Ventilsitz 6 auf und verschließt die Durchgangsöffnung 5. Hierbei ist zwischen einer Mantelfläche 43 des Führungszapfens 41 und einer Innenwand 51 der Durchgangsöffnung 5 ein ringförmiger radialer Spalt vorhanden, d. h. der Führungszapfen 41 des Ventilglieds 3 befindet sich mit der Innenwand 51 nicht in Kontakt.

Figur 3 zeigt eine Konstellation des Ventilkörpers 6 und des Ventilglieds 3 kurz nach dem Öffnen des Magnetventils 1 mit einem kleinen Hub, d. h. unmittelbar vor dem vollständigen Abheben des kalottenförmigen Endbereichs 30 vom Ventilsitz 6. Hierbei berührt der kalottenförmige Endbereich 30, seitlich ausgelenkt, gerade noch einen Teil des Ventilsitzes 6, der Führungszapfen 41 kontaktiert aber bereits die Innenwand 51 der Durchgangsöffnung 5. Hierdurch ist ein im Wesentlichen sichelförmiger Durchlass entstanden, an dem eine starke Drosselung erfolgt. Das Führungselement 40 ist geometrisch so ausgelegt, dass ein Kontakt des kalottenförmigen Endbereichs 30 mit dem Ventilsitz 6, wenn überhaupt, nur im Minimalhubbereich unmittelbar nach dem Öffnen möglich ist und das Ventilglied 3 schnellstmöglich vollständig vom Ventilsitz 6 abhebt.

Im Teilöffnungsbereich mit mittlerem Hub, der in Figur 4 veranschaulicht ist, wird das Führungselement 40 des Ventilglieds 3 kontinuierlich radial an der Innenwand 51 der Durchgangsöffnung 5 geführt. Somit ist ein Kontakt des kalottenförmigen Endbereichs 30 des Ventilglieds 3 mit dem Ventilsitz 6 nicht mehr möglich. Umgekehrt erfolgt beim Schließvorgang des Magnetventils 1 eine Führung des Ventilglieds 3 an der Innenwand 51 der Durchgangsöffnung 5 nur bis zum Minimalhubbereich. Danach kontaktiert ein Teil des kalottenförmigen Endbereichs 30 den konischen Ventilsitz 6 und wird mit weiterer Bewegung in Schließrichtung in die Dichtposition (Hub Null) geführt, ohne dabei noch an der Innenwand 51 anzuliegen.

Das erfindungsgemäße Magnetventil 1 weist somit den Vorteil auf, dass aufgrund des am Ventilglied 3 einstückig angeordneten Führungselements 40 ein großer Teil der Toleranzkette (wie z. B. Montageposition und Schiefstände) entfällt. Aufgrund der somit erzielten großen Führungslänge an den ersten und zweiten Führungsbereichen 20, 50 ist es ferner möglich, eine enge Führung des Ventilglieds 3 zu ermöglichen und die Dicht- und Führungsfunktion auf unterschiedliche, jeweils belastungsunkritische Konstruktionselemente zu verteilen. Ferner werden über den im Wesentlichen gesamten Hubbereich des Magnetventils 1 ein Kontakt bzw. ein Anschlagen des kalottenförmigen Endbereichs 30 am Ventilsitz 6 sowie die daraus resultierenden Belastungen bzw. Beschädigungen verhindert. Daraus resultiert eine erheblich verbesserte Betriebssicherheit und Dauerhaltbarkeit des Magnetventils 1.

## Patentansprüche

1. Magnetventil zum Steuern eines Fluids, umfassend
- einen Anker (2),
- ein Ventilglied (3), welches einen kalottenförmigen Endbereich (30) aufweist und welches am Anker (2)anliegt und gemeinsam mit dem Anker (2) bewegbar ist, und
- einen Ventilkörper (4), mit
- einem Ventilsitz (6), und
- einer Durchgangsöffnung (5), wobei das Ventilglied (3) die Durchgangsöffnung (5) am Ventilsitz (6) freigibt und verschließt,
- wobei ein Führungselement (40) am kalottenförmigen Endbereich (30) angeordnet ist und in die Durchgangsöffnung (5) vorsteht.

2. Magnetventil nach Anspruch 1, **dadurch gekennzeichnet, dass** das Führungselement (40) als Führungszapfen (41) ausgebildet ist, welcher in Axialrichtung (X-X) zentrisch am kalottenförmigen Endbereich (30) angeordnet ist.

3. Magnetventil nach Anspruch 2, **dadurch gekennzeichnet, dass** der Führungszapfen (41) am Ventilglied (3) im Wesentlichen zylindrisch oder kegelförmig ausgebildet ist.

4. Magnetventil nach Anspruch einem der vorhergehenden Ansprüche, **dadurch gekennzeichnet, dass** das Führungselement (40) eine Stirnseite (42) mit einer kalottenförmigen Kuppe oder halbkugelförmigen Kuppe aufweist.

5. Magnetventil nach einem der vorhergehenden Ansprüche, **dadurch gekennzeichnet, dass** das Führungselement (40) eine oder mehrere, vorzugsweise in Axialrichtung (X-X), verlaufende Nuten aufweist.

6. Magnetventil nach einem der vorhergehenden Ansprüche, **dadurch gekennzeichnet, dass** das Führungselement (40) eine oder mehrere Abflachungen aufweist.

7. Magnetventil nach einem der vorhergehenden Ansprüche, **dadurch gekennzeichnet, dass** im geschlossenen Zustand des Magnetventils zwischen einer Mantelfläche (43) des Führungselements (40) und einer Innenwand (51) der Durchgangsöffnung (5) ein ringförmiger Spalt gebildet ist.

8. Magnetventil nach Anspruch einem der vorhergehenden Ansprüche, **dadurch gekennzeichnet, dass** die Durchgangsöffnung (5) in Durchströmungsrichtung (S) sich verjüngend, insbesondere konisch, ausgebildet ist.

9. Magnetventil nach einem der vorhergehenden Ansprüche, **dadurch gekennzeichnet, dass** eine axiale Länge (L) des Führungselements (40) größer als ein maximaler Hub des Magnetventils ist.
